# EUROPEAN PATENT APPLICATION

(11) **EP 1 978 213 A2**
(43) Date of publication of application: **08.10.2008**
(21) Application number: 08153013.1
(22) Date of filing: 19.03.2008
(51) Int. Cl.: F01D 11/24, F01D 25/14

(54) **Mounting system for impingement cooling manifold**

(30) Priority: 27.03.2007 US 691668
(71) Applicant: GENERAL ELECTRIC COMPANY, Schenectady, NY 12345 (US)
(72) Inventor: Erickson, Dean, Simpsonville, SC 29681 (US); Zhang, Hua, Greer, SC 29650 (US); Orza, Mitch, Roswell, GA 30076 (US)
(74) Representative: Illingworth-Law, William Illingworth

(57) **Abstract**

A manifold mounting system for mounting an impingement cooling manifold 140 to a casing of a turbine 120 including a mounting pin 150 affixed to a shroud pin 155 of the turbine wherein the mounting pin 150 extends through the impingement cooling manifold 140 wherein the mounting pin 150 comprises a securing device 160 operable for securing the mounting pin 150 to the impingement cooling manifold 140, and a leveling support leg 170 affixed to the impingement cooling manifold 140 wherein the mounting pin 150, securing device 160, and leveling support leg 170 are operable for adjusting the gap distance 147 between the impingement cooling manifold 140 and the casing of the turbine 120.

## Description

### TECHNICAL FIELD

This application relates generally to the field of impingement cooling manifolds for heavy-duty turbines and more particularly to mounting systems for impingement cooling manifolds for heavy-duty turbines.

### BACKGROUND OF THE INVENTION

Air impingement cooling has been used to manage the casing temperature of small gas turbines and to reduce and maintain the clearances between rotating blades and accompanying interior casing surfaces. One problem for air impingement cooling systems on heavy-duty gas turbines is the ability to achieve a uniform heat transfer coefficient across large non-uniform non-standard casing surfaces. On small gas turbines, small impingement holes and short nozzle to surface distances are normally applied. These factors produce the required higher heat transfer coefficients on the casing. One detrimental impact of applying small of impingement cooling holes is the need for operating with high differential pressure drop across the holes. This results in the requirement for undesirable high cooling air supply pressures which negatively impacts net efficiency.

Impingement cooling has been applied to aircraft engines as a method of turbine clearance control. However, the impingement systems used on aircraft engines cannot be used in heavy-duty turbine applications. The systems applied to aircraft engines utilize air extracted from the compressor as the cooling medium. It is not feasible to use compressor extraction air on heavy-duty gas turbines because the design heat transfer coefficients require cooler air temperatures. Heavy-duty gas turbines have a significantly larger, non-uniform casing surface that requires an intricate manifold design as compared to aircraft engines. Also, the casing thickness and casing thickness variations are considerably greater on heavy-duty gas turbines.

Accordingly, there is a need in the art for a mounting system for impingement cooling manifolds on heavy-duty gas turbines.
Aspects of the present invention are defined in the accompanying claims.

### BRIEF DESCRIPTION OF THE DRAWINGS

The present invention now will be described more fully hereinafter with reference to the accompanying drawings, in which exemplary embodiments of the invention are shown. This invention may, however, be embodied in many different forms and should not be construed as being limited to the embodiments set forth herein; rather, these embodiments are provided so that this disclosure will be thorough and complete, and will convey the scope of the invention to those skilled in the art.
FIG. 1 is a cross-sectional view of a heavy duty gas turbine according to the embodiment of the invention.
FIG. 2 is a close-up view of the turbine blade to shroud clearance according to the embodiment of the invention.
FIG. 3 is an impingement cooling system according to the embodiment of the invention.

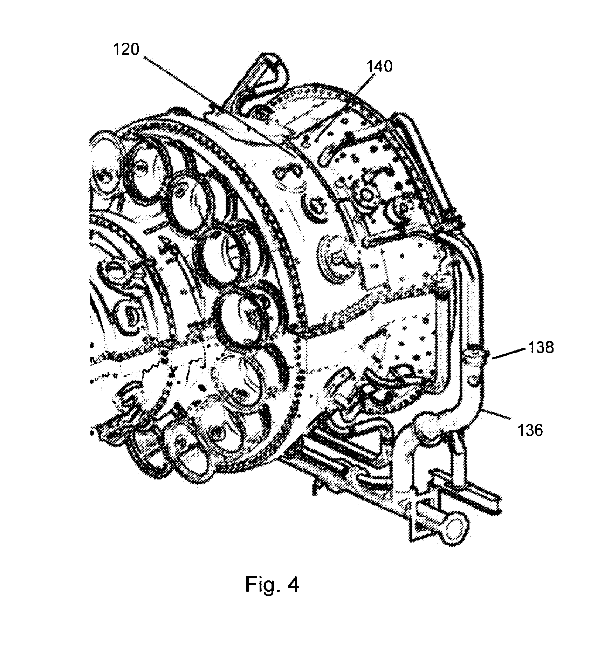

FIG. 4 is a perspective view of a impingement cooling manifold attached to a casing of a turbine according to the embodiment of the invention.
FIG. 5 is a cross-sectional view of a impingement cooling manifold attached to a casing of a turbine according to the embodiment of the invention.
FIG. 6 is a perspective view of a plurality of shroud pins and mounting pins according to the embodiment of the invention.
FIG. 7 is a side view of a mounting pin attached to a shroud pin according to the embodiment of the invention.
FIG. 8 is a perspective view of a leveling support leg according to the embodiment of the invention.
FIG. 9 is a perspective view of a mounting system attached to an impingement cooling manifold according to the embodiment of the invention.
FIG. 10 is a perspective view of an impingement cooling manifold attached to a casing of a turbine using a mounting system according to the embodiment of the invention.

### DETAILED DESCRIPTION OF THE INVENTION

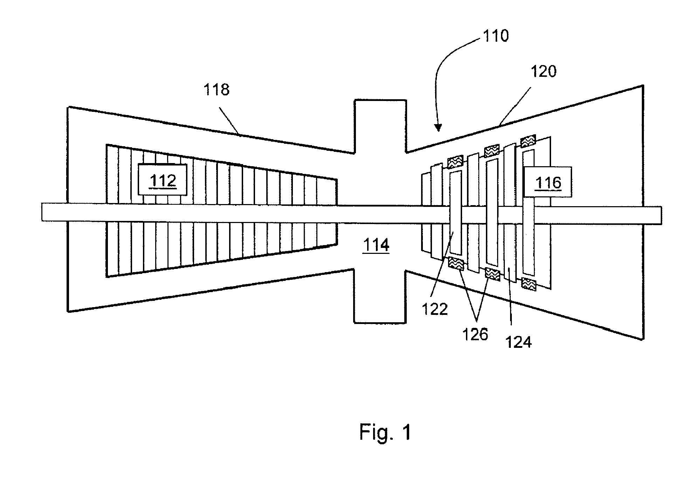

FIG. 1 illustrates an exemplary embodiment of a heavy-duty turbine 110. The heavy-duty turbine engine includes a compressor section 112, combustor section 114, and a turbine section 116. The turbine 110 also includes a compressor casing 118 and a turbine casing 120. The turbine and compressor casings enclose major parts of the heavy-duty turbine. The turbine section 116 includes a shaft and a plurality of sets of rotating and stationary turbine blades.

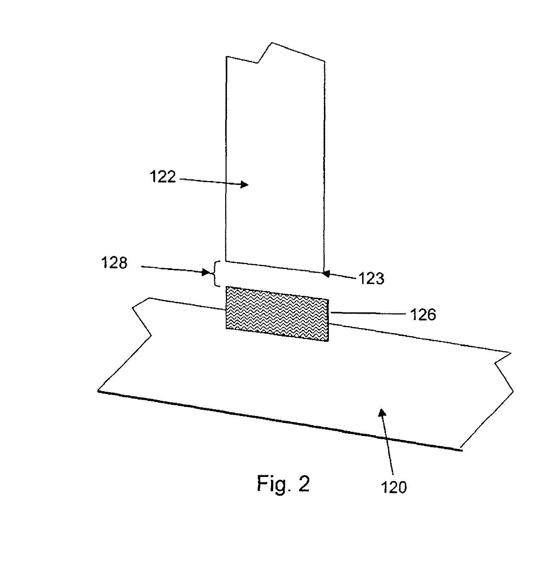

Referring to FIGS. 1 and 2, the turbine casing 120 may include a shroud 126 affixed to the interior surface of the casing 120. The shroud 126 may be positioned proximate to blade tips 123 of the rotating turbine blades 122 to minimize air leakage past the blade tip 123. The distance between the blade tip 123 and the shroud 126 is referred to as the clearance 128. It is noted that the clearances 128 of each turbine stage are not consistent due to the different thermal growth characteristics of the blades and casing.

A key contributor in the efficiency of heavy-duty gas turbines is the amount of air/exhaust gas leakage through the blade tip to casing clearance 128. Due to the different thermal growth characteristics of the turbine blades 122 and turbine casing 120, clearances 128 significantly change as the turbine transitions through transients from ignition to a base-load steady state condition. A clearance control system, including its operating sequence may be implemented to address the specific clearance characteristics during all operating conditions. Incorrect design and/or sequencing of the control system may lead to excessive rubbing of the turbine blade 123 tips with the casing shrouds 126, which can result in increased clearances and reduced performance.

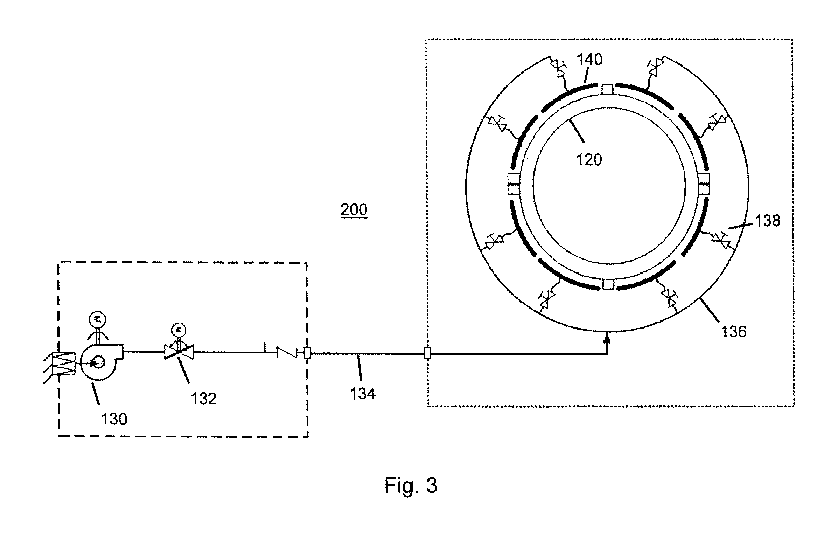

As illustrated in the exemplary embodiment of FIG. 3, an impingement air-cooling system 200 may be used to reduce and maintain the clearances between the turbine shroud 126 and the accompanying blade tip 123. Referring to FIG. 3, the impingement air-cooling system 200 may include a blower 130, a flow control damper 132, interconnect piping 134, a distribution header 136, flow metering valves or orifices 138 and into a series impingement cooling manifolds 140. The impingement cooling manifold 140 is affixed to the turbine casing 120. In the exemplary embodiment of FIG. 3, a plurality of impingement manifolds 140 are affixed about the circumference of the turbine casing 120. The impingement cooling blower 130 takes suction from ambient air and blows the air through the flow control damper 132, interconnect piping 134, distribution header 136, flow metering valves or orifices 138 and into the impingement cooling manifolds 140. The blower 130 may be any blowing device including a fan or a jet. The impingement cooling manifold 140 insures a uniform heat transfer coefficient is delivered to the turbine casing 120. It should be appreciated that the impingement air-cooling system is not limited to the components disclosed herein but may include any components that enables air to pass along the impingement cooling manifolds.

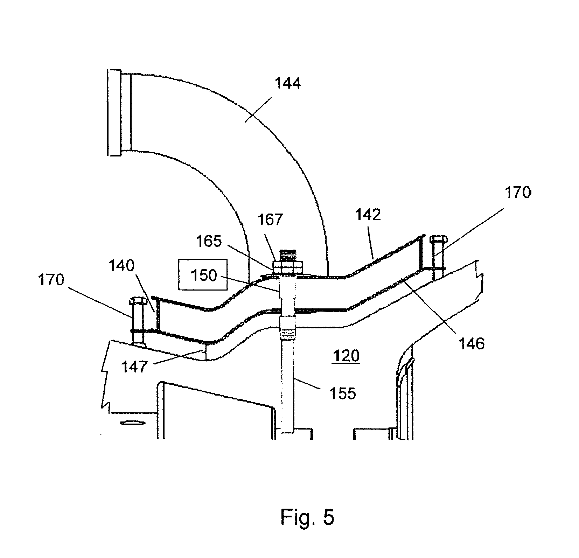

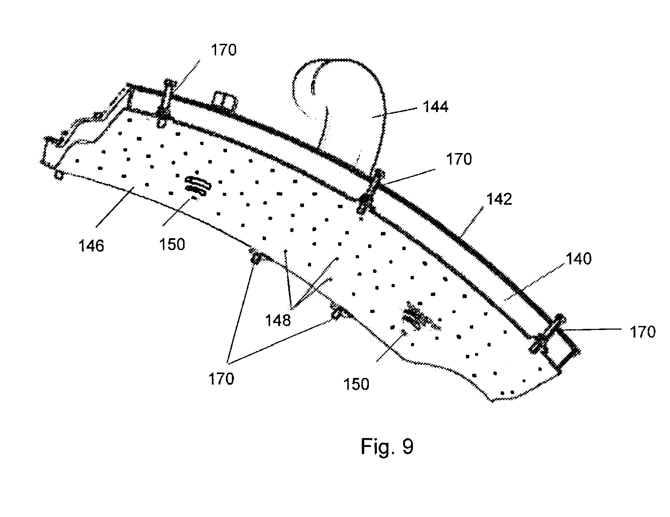

Referring to the exemplary embodiment illustrated in FIGS. 5 and 9, the impingement cooling manifolds 140 may be designed to the contours of the target area of the turbine casing 120. Each impingement cooling manifold 140 may include an upper plate 142 with feed pipe 144, a lower plate 146 with multiple impingement holes 148, side pieces, leveling support legs 170 and mounting pins 150. The impingement holes 148 permit the air to flow from the impingement cooling manifold to the turbine casing to selectively cool the turbine casing.

The impingement holes 148 may be positioned in an array. In an exemplary embodiment, the impingement holes 148 may be spaced in the range from 1.25 to 2.5 inches. In an exemplary embodiment, the individual impingement holes 148 may be sized between 0.12 and 0.2 inches. The varying hole sizes and spacing are required to compensate for the nonuniformity of the turbine casing geometry. The size and positioning of the impingement holes 148 on the lower plate 146 produce a uniform heat transfer coefficient across the casing targeted by the impingement air-cooling system. However, the impingement holes are not limited to these sizes or spacings. The distance between the upper 142 and lower plates 146 also may be dimensioned to minimize internal pressure variations, which results in uniform cooling hole pressure ratios.

The gap distance 147 between impingement cooling manifold lower plates 146 and the turbine casing 120 effects the heat transfer coefficient. Too large of a gap distance 147 can result in a non-optimum heat transfer coefficient. Too little of a gap distance 147 can result in both non-optimum and a non-uniform heat transfer coefficient. In an exemplary embodiment, a gap of between 0.5 and 1.0 inch provides a suitable heat transfer coefficient. However, the gap distance 147 in not limited to this range and may be any distance that provides a suitable heat transfer coefficient.

An exemplary embodiment may include a plurality of impingement cooling manifolds 140. The plurality of impingement cooling manifolds 140 may be affixed to the casing 120 of the turbine directly above target cooling area. The impingement cooling manifolds 140 may be positioned such that there is ample spacing between their edges and any protrusions off of the casing. The spacing provides a free path for the air passing through the impingement holes 148 to exhaust from under the impingement cooling manifold 140 to the environment. In an exemplary embodiment, the spacing between two adjacent impingement cooling manifolds may be between 1 to 30 inches and is dependent on casing protrusions and flanged joints. The spacing are not limited to these dimensions and may be at any suitable distance. The impingement cooling manifolds 140 also may provide impingement cooling to any of the axial flanges, including a horizontal split joint.

### MOUNTING THE MANIFOLDS

The manifold 140 may be mounted to the casing 120 of the turbine without machining the casing 120. The manifold 140 should maintain a substantially uniform distance from the casing 120 across the entire surface of the manifold 140 for the most efficient and productive air flow across the casing 120. However, turbine casings 120 from unit to unit have wide variations in geometries. FIGS. 5-10 illustrate exemplary embodiments of the mounting system to account for the variation in turbine geometries without machining the turbine.

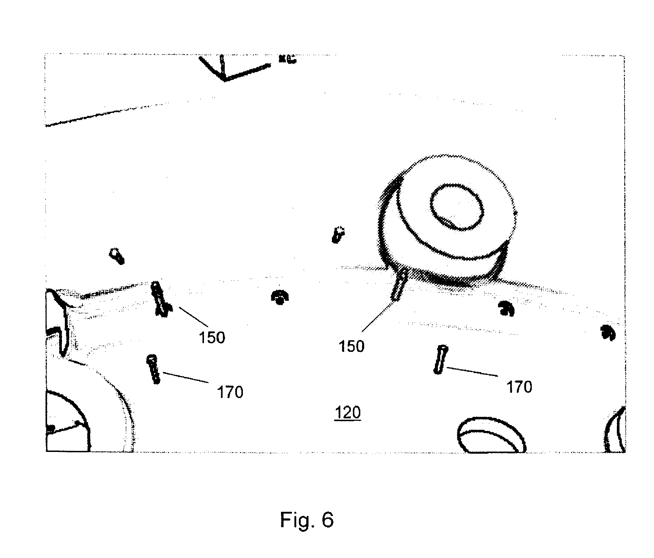

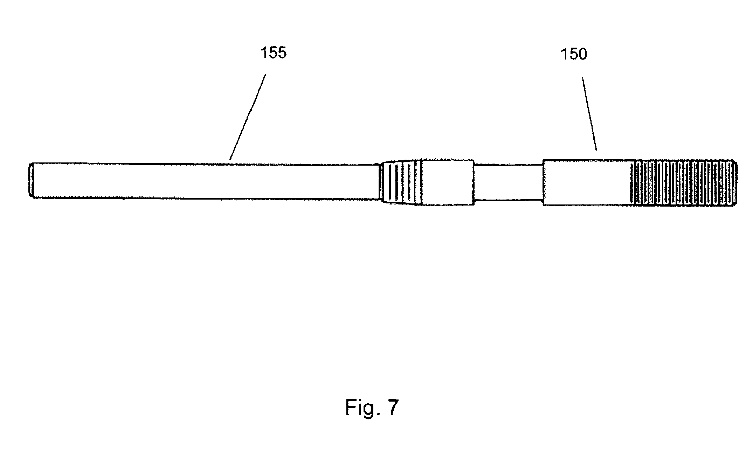

FIG. 5 is an exemplary embodiment of the mounting system including at least one mounting pin and at least one leveling support leg. The at least one mounting pin 150 may be used to mount the manifold 140 to the casing 120 and modify the gap distance 147. The mounting pin 150 may be affixed to a shroud pin 155 located on the casing 120. As illustrated in the exemplary embodiment of FIG. 6, the shroud pin 155 extends from the casing 120 of the turbine outward. The mounting pin 150 provides extra length to the shroud pin 155 to permit the manifold 140 to be mounted thereon. A securing device 160 may affix the mounting pin 150 to the manifold 140. In an exemplary embodiment, the securing device includes a setting nut 165 affixed towards the distal end of the mounting pin 150. FIG. 7 illustrates an exemplary embodiment of a mounting pin 150 affixed to a shroud pin 155. It should be appreciated that affixation of the mounting pin to the shroud pin may include the mounting pin being an extension of or incorporated into the shroud pin.

As shown in the exemplary embodiment of FIG. 5, the mounting pin 150 extends through a hole on the manifold 140 such that the manifold 140 may rest upon the setting nut 165. The setting nut 165 may be tightened or loosened to adjust the gap distance 147 between the manifold 140 and the casing 120 proximate to the mounting pin. A securing nut 167 may be affixed to the proximate end of the mounting pin 150 to secure the manifold 140 to the setting nut 165 of the mounting pin 150. One of ordinary skill in the art will appreciate that the securing device is not limited to the use of setting nuts and may include any means of adjusting the distance between the manifold 140 and the casing 120 including but not limited to setting pins, clips, or any other device.

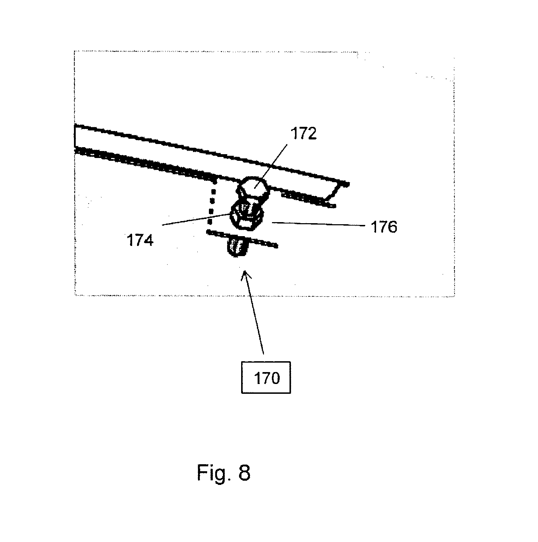

The mounting system also may include at least one leveling support leg 170 to adjust the manifold 140 to create a substantially uniform gap distance 147 between the casing 120 and the manifold 140. The leveling support leg 170 may be affixed to the manifold 140 and positioned against the casing 120. The leveling support leg 170 may be positioned at any location on the manifold 140. In an exemplary embodiment, the at least one leveling support leg 170 may be positioned near the perimeter of the manifold 140. As shown in the exemplary embodiment of FIG. 8, the leveling support leg 170 may include a leveling screw 172 and leveling nut 174 that may affix the leveling support leg 170 to a support flange 176 that may be attached to the manifold lower plate 146. The leveling screw 172 may be used to adjust the distance between the manifold 140 and the casing 120 at the location of the leveling support leg. One of ordinary skill in the art will appreciate that the leveling support legs 170 are not limited to the use of leveling screws 172 and leveling nuts 174 but may implement any device that will assist in the adjusting of the gap distance 147 between the manifold 140 and the casing 120 proximate to the leveling support leg.

FIG. 9 illustrates an exemplary embodiment of the mounting system attached to the manifold 140 prior to being affixed to the casing 120. It should be appreciated that the mounting system does not have to be attached to the manifold prior to affixation to the casing. For example, the mounting pins 150 may be affixed to the shroud pins 155 prior to attachment to the manifold 140.

FIG. 5 illustrates an exemplary embodiment of the mounting pins 150 and the leveling support legs 170 of the mounting system affixed to the casing 120 of the turbine. As shown in FIG. 5, the casing 120 may not be uniform. Therefore, the gap distance 147 may not be uniform across the surface of the manifold 140. To adjust the gap distance 147, the mounting pin 150 and leveling support leg 170 may be independently adjusted to set the gap distance 147 between the manifold 140 and casing 120 proximate to each respective mounting pin 150 or leveling support leg 170. In the exemplary embodiment of FIG. 5 for example, the mounting pin adjusts a middle portion of the manifold 140 and the plurality of leveling support legs 170 adjusts a perimeter of the manifold 140.

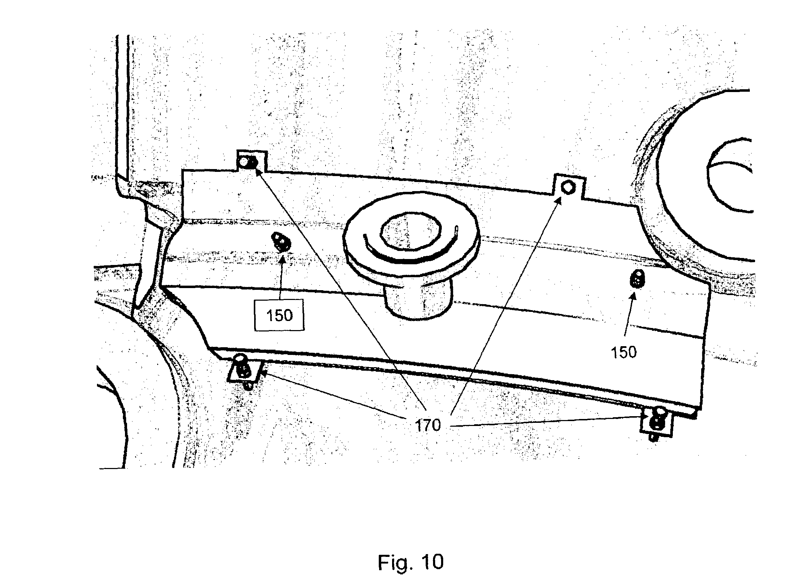

A plurality of mounting pins 150 and a plurality of leveling support legs 170 may be included to mount a manifold 140 and set the gap distance 147. In the exemplary embodiment of FIG. 10 for example, the mounting system includes two mounting pins 150 positioned in middle portions of the manifold 140 and four leveling support legs 170 positioned at the perimeter of the manifold 140. It should be appreciated that the mounting system may include any number of mounting pins 150 and leveling support legs 170 and is not limited to the embodiment illustrated in FIG. 10.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in generic and descriptive sense only and not for purposes of limitation.

## Claims

1. A manifold mounting system for mounting an impingement cooling manifold (140) to a casing of a turbine (120) comprising:
a mounting pin (150) affixed to a shroud pin (155) of the turbine wherein the mounting pin (150) extends through the impingement cooling manifold (140) wherein the mounting pin (150) comprises a securing device (160) operable for securing the mounting pin (150) to the impingement cooling manifold (140); and
a leveling support leg (170) affixed to the impingement cooling manifold (140) wherein the mounting pin (150), securing device (160), and leveling support leg (170) are operable for adjusting the gap distance (147) between the impingement cooling manifold (140) and the casing of the turbine (120).

2. The system of Claim 1, wherein the securing device (160) comprises a setting nut (165) to adjust the gap distance (147) between the impingement cooling manifold (140) and the casing of the turbine (120).

3. The system of Claim 1 or Claim 2, wherein the leveling support leg (170) comprises a leveling (172) and a leveling nut (174).

4. The system of any one of the preceding Claims, wherein the leveling support leg (170) is affixed to a flange (176) of the impingement cooling manifold (140).

5. The system of any one of the preceding Claims, comprising a plurality of mounting pins (150) and a plurality of leveling support legs (170).

6. A mounting system for an impingement cooling manifold (140) cooling system for heavy duty turbines (110) comprising:
an impingement cooling manifold (140) affixed to a casing of the turbine (120), wherein the impingement cooling manifold (140) comprises a plurality of impingement holes (148) in the surface of the impingement cooling manifold (140);
a blower that provides air flow across the plurality of impingement holes (148) of the impingement cooling manifold (140) to cool the casing of the heavy-duty turbine (110) to control the clearance between a tip of a turbine blade (122) and a shroud of the heavy-duty turbine (110);
a mounting pin (150) affixed to a shroud pin (155) of the turbine wherein the mounting pin (150) extends through the impingement cooling manifold (140) wherein the mounting pin (150) comprises a securing device (160) operable for securing the mounting pin (150) to the impingement cooling manifold (140); and
a leveling support leg (170) affixed to the impingement cooling manifold (140) wherein the mounting pin (150), securing device (160), and leveling support leg (170) are operable for adjusting the gap distance (147) between the impingement cooling manifold (140) and the casing of the turbine (120).

7. A method for mounting an impingement cooling manifold (140) system to a casing of a turbine (120) comprising:
affixing a mounting pin (150) to an existing shroud pin (155) of the turbine wherein the mounting pin (150) extends through the impingement cooling manifold (140);
securing the impingement cooling manifold (140) to the mounting pin (150) wherein the mounting pin (150) comprises a securing device (160) operable to adjust a gap distance (147) between the impingement cooling manifold (140) and the casing of the turbine (120); and
affixing a leveling support leg (170) to the impingement cooling manifold (140) operable to adjust the gap distance (147) between the impingement cooling manifold (140) and the casing of the turbine (120).

8. The method of Claim 7, further comprising:
adjusting the gap distance (147) between the impingement cooling manifold (140) and the casing of the turbine (120) using the mounting pin (150), securing device (160) of the mounting pin (150), and/or the leveling support legs (170).
